# EUROPEAN PATENT APPLICATION

(11) **EP 4 597 727 A1**
(43) Date of publication of application: **06.08.2025**
(21) Application number: 23882977.4
(22) Date of filing: 16.10.2023
(51) Int. Cl.: H01M 50/46, H01M 50/403, H01M 50/449, H01M 50/417, H01M 50/42, H01M 50/426, H01M 10/052

(54) **METHOD FOR MANUFACTURING SEPARATOR EQUIPPED WITH POLYMER ADHESIVE LAYER, POLYMER ADHESIVE LAYER-EQUIPPED SEPARATOR FORMED THEREBY, AND ELECTROCHEMICAL DEVICE INCLUDING SAME**

(30) Priority: 24.10.2022 KR 20220137451
(71) Applicant: LG Energy Solution, Ltd., Seoul 07335 (KR)
(72) Inventor: KIM, Hye-Won, Daejeon 34122 (KR); LEE, Ji-Su, Daejeon 34122 (KR); KA, Kyung-Ryun, Daejeon 34122 (KR); SUNG, Dong-Wook, Daejeon 34122 (KR)
(74) Representative: Hoffmann Eitle
(86) International application number: PCT/KR2023/015956
(87) International publication number: WO 2024/090870

(57) **Abstract**

Provided is a method for manufacturing a separator having a polymer adhesive layer, comprising (S1) preparing an aqueous polymer slurry comprising a particulate binder polymer having a glass transition temperature (Tg) of 20°C or more and a particle size D50 of 300 to 800 nm, a wetting agent and a particulate acrylic binder polymer having a Tg of - 10°C or less and a particle size D50 of 100 to 200 nm; and (S2) coating the aqueous polymer slurry on at least one surface of a polyolefin-containing porous membrane having pores and drying the aqueous polymer slurry.

## Description

### TECHNICAL FIELD

The present disclosure relates to a method for manufacturing a separator having a polymer adhesive layer, a separator having a polymer adhesive layer formed therefrom and an electrochemical device comprising the same.

The present application claims priority to Korean Patent Application No. 10-2022-0137451 filed on October 24, 2022 in the Republic of Korea, the disclosure of which is incorporated herein by reference.

### BACKGROUND ART

In general, electrochemical devices such as lithium secondary batteries basically include positive electrode/separator/negative electrode/electrolyte solution and can be charged and discharged by reversible conversion of chemical energy and electrical energy. Since they store energy with high energy density, they are used in a wide range of applications including small electronic devices such as mobile phones, laptop computers and so on. Recently, in response to environmental issues, high oil prices, energy efficiency and storage, their application is rapidly expanding to electric vehicles, hybrid electric vehicles (HEV), plug-in EV, e-bikes and energy storage systems (ESS).

**In** the electrochemical devices, a polyolefin-containing porous membrane is commonly used as the separator.

To improve the adhesion of the polyolefin-containing porous membrane to the electrode, the separator having a polymer adhesive layer has been developed in which the adhesive layer of binder polymer particles is formed on the surface of the porous membrane. The particulate binder polymer adhesive layer is effective in minimizing the resistance rise of the separator and minimizing the decrease in air permeability of the polyolefin-containing porous membrane.

The coating layer of binder polymer particles is formed by dispersing the binder polymer particles in an aqueous solvent such as ethanol or water and adding a wetting agent such as a surfactant to prepare an aqueous slurry, coating the aqueous slurry on one or two surfaces of the polyolefin-containing porous membrane and drying the aqueous slurry. Here, the wetting agent helps ensure the coating of the aqueous slurry on the polyolefin-containing porous membrane having hydrophobic properties.

However, the wetting agent is permeated into the pores of the polyolefin-containing porous membrane in the process of coating and drying the aqueous slurry for forming the coating layer, causing resistance to rise and air permeability to decrease.

### SUMMARY

### Technical Problem

The present disclosure is directed to providing a method for manufacturing a separator having a polymer adhesive layer with improved resistance and air permeability when using a wetting agent to improve the coating in the formation of an adhesive layer of polymer particles on a polyolefin porous membrane.

The present disclosure is further directed to providing the separator having the polymer adhesive layer having the above-described feature.

The present disclosure is further directed to providing an electrochemical device comprising the separator having the polymer adhesive layer having the above-described feature.

These and other objectives and advantages of the present disclosure will be understood by the following description. It will be readily understood that these and other objectives and advantages of the present disclosure may be realized by the means or methods set forth in the appended claims and a combination thereof.

### Technical Solution

An aspect of the present disclosure relates to a method for manufacturing a separator having a polymer adhesive layer, comprising (S1) preparing an aqueous polymer slurry comprising a particulate binder polymer having a glass transition temperature (Tg) of 20°C or more and a particle size D50 of 300 to 800 nm, a wetting agent and a particulate acrylic binder polymer having a Tg of -10°C or less and a particle size D50 of 100 to 200 nm; and (S2) coating the aqueous polymer slurry on at least one surface of a polyolefin-containing porous membrane having pores and drying the aqueous polymer slurry.

According to a second aspect of the present disclosure, in the first aspect, the particle size D50 of the particulate binder polymer: the particle size D50 of the particulate acrylic binder polymer is 2: 1 to 6:1.

According to a third aspect of the present disclosure, in the first or second aspect, the particle size D50 of the particulate binder polymer is 300 to 600 nm, and the particle size D50 of the particulate acrylic binder polymer is 100 to 150 nm.

According to a fourth aspect of the present disclosure, in any one of the first to third aspects, the Tg of the particulate acrylic binder polymer is -20°C or less.

According to a fifth aspect of the present disclosure, in any one of the first to fourth aspects, a weight ratio of the particulate binder polymer and the particulate acrylic binder polymer is 95:5 to 97:3.

According to a sixth aspect of the present disclosure, in any one of the first to fifth aspects, the wetting agent is included in an amount of 1 to 30 weight% based on a total weight of the particulate binder polymer and the particulate acrylic binder polymer.

According to a seventh aspect of the present disclosure, in any one of the first to sixth aspects, the particulate binder polymer is an acrylic binder polymer, a polyvinylidene fluoride-containing binder polymer or a mixture thereof.

According to an eighth aspect of the present disclosure, in any one of the first to seventh aspects, the polyvinylidene fluoride-containing binder polymer is a homopolymer of vinylidene fluoride, a copolymer of vinylidene fluoride and other polymerizable monomer or a mixture thereof.

According to a ninth aspect of the present disclosure, in any one of the first to eighth aspects, the particulate acrylic binder polymer includes an acrylic polymer including alkyl methacrylate repeat units having an alkyl group having 1 to 18 carbon atoms.

According to a tenth aspect of the present disclosure, in any one of the first to ninth aspects, the particulate binder polymer is a polyvinylidene fluoride-containing binder polymer, and the particulate acrylic binder polymer is an acrylic polymer including alkyl methacrylate repeat units having an alkyl group having 1 to 18 carbon atoms.

According to an eleventh aspect of the present disclosure, in any one of the first to tenth aspects, the wetting agent is at least one selected from the group consisting of a fluorine-containing surfactant, a siloxane-containing surfactant and a hydrocarbon-containing surfactant.

According to a twelfth aspect of the present disclosure, in any one of the first to eleventh aspects, a dispersion medium of the aqueous polymer slurry is water.

A thirteenth aspect of the present disclosure relates to a separator having a polymer adhesive layer, comprising a porous polymer substrate and a polymer adhesive layer on at least one surface of the porous polymer substrate, wherein the polymer adhesive layer comprises a particulate binder polymer, a non-particulate binder polymer and a wetting agent, wherein the particulate binder polymer has a Tg of 20°C or more and an average particle size of 300 to 800 nm, and wherein the non-particulate binder polymer is an acrylic binder polymer having a Tg of -10°C or less.

A fourteenth aspect of the present disclosure relates to an electrochemical device comprising a negative electrode, a positive electrode and a separator interposed between the negative electrode and the positive electrode, wherein the separator is the separator having the polymer adhesive layer according to the thirteenth aspect.

According to a fifteenth aspect of the present disclosure, in the fourteenth aspect, the electrochemical device is a lithium secondary battery.

### Advantageous Effects

According to the method for manufacturing the separator having the polymer adhesive layer according to the present disclosure, the particulate acrylic binder polymer having low Tg loses the particulate phase in the slurry, then transforms into a film and migrates to the polyolefin-containing porous membrane during drying of the slurry, thereby preventing the wetting agent from permeating into the pores of the porous membrane. Accordingly, it may be possible to manufacture the separator having low resistance and high air permeability when using the wetting agent to improve the coating in the formation of the adhesive layer of particulate binder particles on the polyolefin porous membrane.

Meanwhile, the particulate binder polymer in the polymer adhesive layer improves the adhesive strength of the polyolefin-containing porous membrane to the electrode.

### BRIEF DESCRIPTION OF THE DRAWING

The accompanying drawing illustrates an exemplary embodiment of the present disclosure and together with the detailed description, serves to provide an explanation of the principle of the present disclosure, and the scope of the present disclosure is not limited thereto. In the drawing, for clarity of description, the shape, size, scale or proportion of the elements may be exaggerated for emphasis.

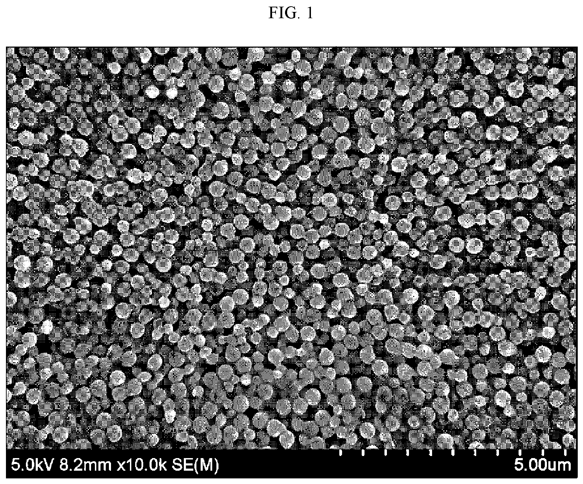

FIG. 1 is a scanning electron microscopy (SEM) image showing a surface of a separator having a polymer adhesive layer according to a specific embodiment of the present disclosure.

### DETAILED DESCRIPTION

It should be understood that the terms or words used in the present disclosure and the appended claims should not be construed as being limited to general and dictionary meanings, but rather interpreted based on the meanings and concepts corresponding to the technical aspect of the present disclosure on the basis of the principle that the inventor is allowed to define the terms appropriately for the best explanation. Therefore, the embodiments described herein and illustrations shown in the drawing are provided to describe the exemplary embodiments of the present disclosure, but not intended to fully describe the technical aspect of the present disclosure, so it should be understood that a variety of other equivalents and modifications could have been made thereto at the time the application was filed.

A method for manufacturing a separator having a polymer adhesive layer according to a first aspect of the present disclosure includes:
(S1) preparing an aqueous polymer slurry comprising a particulate binder polymer having the glass transition temperature Tg of 20°C or more and the particle size D50 of 300 to 800 nm, a wetting agent and a particulate acrylic binder polymer having the Tg of -10°C or less and the particle size D50 of 100 to 200 nm; and
(S2) coating the aqueous polymer slurry on at least one surface of a polyolefin-containing porous membrane having pores and drying the aqueous polymer slurry.

In the present disclosure, the particulate binder polymer and the particulate acrylic binder polymer represents that they are added in a particle shape to an aqueous dispersion medium when preparing the aqueous polymer slurry, and the term "particulate" is distinguished from "non-particulate" defined as a state in which it loses the particulate phase and transforms into a film during the drying when forming the polymer adhesive layer, no matter whether it dissolves in the solvent or not. That is, in the present disclosure, the term "particulate" is defined as keeping the particle shape substantially the same as added, and the particle shape is typically a circular shape but is not limited thereto.

First, prepare the aqueous polymer slurry comprising the particulate binder polymer having the Tg of 20°C or more and the particle size D50 of 300 to 800 nm, the wetting agent and the particulate acrylic binder polymer having the Tg of -10°C or less and the particle size D50 of 100 to 200 nm (S1).

The particulate binder polymer plays a role in improving the adhesion to the electrode, and maintains the particulate phase in the formed polymer adhesive layer. The Tg of the particulate binder polymer is 20°C or more, and more specifically 30°C or more. When the Tg is less than 20°C, there is a risk of loss of the particulate phase during the coating and drying of the slurry. Additionally, the particulate binder polymer has the particle size D50 of 300 to 800 nm. When the particle size D50 is smaller than 300 nm, a difference between the particle size D50 of the particulate binder polymer and the particle size D50 of the particulate acrylic binder polymer is not large, which makes it difficult to separate them from each other, resulting in poor adhesion to the electrode and low air permeability. Additionally, when the particle size D50 is larger than 800 nm, a nonuniform coating layer may be formed, and as a consequence, electrode-separator adhesion may not be achieved. From this perspective, the particle size D50 of the particulate binder polymer may be specifically 300 to 600 nm, and more specifically 400 to 600 nm.

The particulate binder polymer may include an acrylic binder polymer, a polyvinylidene fluoride-containing binder polymer or a mixture thereof, but is not limited thereto.

The polyvinylidene fluoride-containing binder polymer may include a homopolymer of vinylidene fluoride, a copolymer of vinylidene fluoride and other polymerizable monomer or a mixture thereof.

The other polymerizable monomer may include at least one selected from the group consisting of tetrafluoroethylene, hexafluoropropylene, trifluoroethylene, chloro fluoroethylene, 1, 2-difluoroethylene, perfluoro(methylvinyl)ether, perfluoro (ethylvinyl)ether, perfluoro(propylvinyl)ether, perfluoro(1,3-dioxol), perfluoro(2,2-dimethyl-1,3-dioxol), trichloroethylene and vinyl fluoride, but is not limited thereto. In particular, the fluorine-containing polymer may be a copolymer of vinylidene fluoride and hexafluoropropylene. The other polymerizable monomer may be included in an amount of 1 to 20 weight% of the copolymer, but is not limited thereto.

When an acrylic binder polymer is used as the particulate binder polymer, the acrylic binder polymer may include acrylic polymers including alkyl methacrylate repeat units having an alkyl group having 1 to 18 carbon atoms, but is not limited thereto. The acrylic binder polymer may be, more specifically, polymers including carboxylic acid ester as repeat units, and preferably (meth)acrylic acid ester. Specific examples of the (meth)acrylic acid ester may include, for example, at least one selected from methyl methacrylate, ethyl methacrylate, n-propyl methacrylate, i-propyl methacrylate, n-butyl methacrylate, i-butyl methacrylate, n-amyl methacrylate, i-amyl methacrylate, hexyl methacrylate, cyclohexyl methacrylate, 2-ethylhexyl methacrylate, n-octyl methacrylate, nonyl methacrylate, decyl methacrylate, hydroxymethyl methacrylate, hydroxyethyl methacrylate, ethylene glycol methacrylate, ethylene glycol dimethacrylate, propylene glycol dimethacrylate, trimethylolpropane trimethacrylate, pentaerythritol tetra(meth)acrylate, dipentaerythritol hexa(meth)acrylate, allyl methacrylate and ethylene dimethacrylate. Among them, at least one selected from methyl methacrylate, ethyl methacrylate and 2-ethylhexyl methacrylate is desirable, and methyl methacrylate is especially desirable.

The wetting agent is added to help the aqueous slurry of the above-described composition soak into the polyolefin-containing porous membrane having hydrophobic properties, thereby ensuring the coating. The wetting agent may include any known wetting agent, and for example, a fluorine-containing surfactant, a siloxane-containing surfactant and, a hydrocarbon-containing surfactant may be used, and preferably a fluorine-containing surfactant may be used but is not limited thereto.

The Tg of the particulate acrylic binder polymer is -10°C or less. The particulate acrylic binder polymer has low Tg, and loses the particulate phase in the slurry or during the drying of the slurry, transforms into a film by the collapse of the added particulate phase and migrates to the polyolefin-containing porous membrane during the drying of the slurry, thereby reducing the permeation of the wetting agent into the pores of the porous membrane. Accordingly, it may be possible to manufacture the separator having low resistance and high air permeability when using the wetting agent to improve the coating in the formation of the adhesive layer of particulate binder particles on the polyolefin porous membrane. Specifically, it is presumed that the acrylic binder polymer migrates to the polyolefin-containing porous membrane during the drying of the slurry by interaction between the alkyl group of the acrylic binder polymer and the hydrogen group of the polyolefin-containing porous membrane, thereby reducing the amount of the wetting agent penetrating into the pores of the polyolefin-containing porous membrane by interaction with the alkyl group of the acrylic binder polymer, for example, surrounding the acrylic binder polymer.

When the Tg of the particulate acrylic binder polymer exceeds -10°C, the particulate phase may be retained, thereby failing to perform the above-described function. From this perspective, the Tg is, more preferably, -20°C or less. The particle size D50 is 100 to 200 nm, and when the particle size D50 is smaller than 100 nm, the acrylic binder polymer may permeate into the pores of the polyolefin porous membrane when forming the coating layer, thereby failing to prevent the wetting agent from permeating into the fabric. Additionally, when the particle size D50 of the particulate acrylic binder polymer is larger than 200 nm, a difference between the particle size D50 of the particulate acrylic binder polymer and the particle size D50 of the particulate binder polymer is not large, which makes it difficult to separate them from each other, resulting in poor adhesion to the electrode and low air permeability. From this perspective, the particle size D50 of the particulate acrylic binder polymer may be specifically 100 to 180 nm, and more specifically 100 to 150 nm, and the particle size D50 of the particulate binder polymer: the particle size D50 of the particulate acrylic binder polymer may be, specifically 2:1 to 6:1, and more specifically 2.5:1 to 5:1.

The particulate acrylic binder polymer may include acrylic polymers including alkyl methacrylate repeat units having an alkyl group having 1 to 18 carbon atoms, but is not limited thereto. The acrylic binder polymer may be, more specifically, polymers including carboxylic acid ester as repeat units, and preferably (meth)acrylic acid ester. Specific examples of the (meth)acrylic acid ester may include, for example, at least one selected from methyl methacrylate, ethyl methacrylate, n-propyl methacrylate, i-propyl methacrylate, n-butyl methacrylate, i-butyl methacrylate, n-amyl methacrylate, i-amyl methacrylate, hexyl methacrylate, cyclohexyl methacrylate, 2-ethylhexyl methacrylate, n-octyl methacrylate, nonyl methacrylate, decyl methacrylate, hydroxymethyl methacrylate, hydroxyethyl methacrylate, ethylene glycol methacrylate, ethylene glycol dimethacrylate, propylene glycol dimethacrylate, trimethylolpropane trimethacrylate, pentaerythritol tetra(meth)acrylate, dipentaerythritol hexa(meth)acrylate, allyl methacrylate and ethylene dimethacrylate. Among them, at least one selected from methyl methacrylate, ethyl methacrylate and 2-ethylhexyl methacrylate is desirable, and methyl methacrylate is especially desirable.

**In** an embodiment of the present disclosure, the particulate binder polymer may be a polyvinylidene fluoride-containing binder polymer, and the particulate acrylic binder polymer may be an acrylic polymer including alkyl methacrylate repeat units having an alkyl group having 1 to 18 carbon atoms.

When considering the adhesion to the electrode and the resistance and air permeability of the separator, a weight ratio of the particulate binder polymer and the particulate acrylic binder polymer may be, for example, 95:5 to 97: 3, but is not limited thereto. Additionally, the wetting agent may be included in an amount of 1 to 30 weight% based on the total weight of the particulate binder polymer and the particulate acrylic binder polymer.

In addition to the above-described components, the aqueous polymer slurry may further comprise a thickening agent without hindering the purpose of the present disclosure.

In an embodiment of the present disclosure, the aqueous dispersion medium of the aqueous polymer slurry may include at least one of water or alcohol having 1 to 5 carbon atoms. For example, the aqueous dispersion medium may include a mixture of water and isopropyl alcohol. In the manufacturing method, since the aqueous dispersion medium is used, the binder particles do not dissolve in the dispersion medium and is dispersed in the aqueous dispersion medium, and do not go into the pores of the polyolefin-containing porous membrane. In particular, when water is used as the aqueous dispersion medium, there is no need to install an anti-explosion equipment, thereby increasing economic efficiency.

Meanwhile, in an embodiment of the present disclosure, the aqueous polymer slurry is preferably controlled such that the concentration of solids excluding the dispersion medium is in a range between 3 wt% and 50 wt%. Adjusting the concentration of solids and the average particle size and content ratio of the binder particles within the above-described range may be advantageous for obtaining the separator having the polymer adhesive layer of the present disclosure.

Subsequently, the prepared aqueous polymer slurry is coated on at least one surface of the polyolefin-containing porous membrane having pores and dried (S2).

In an embodiment of the present disclosure, a coating method may include dip coating, die coating, roll coating, comma coating or a combination thereof.

According to a specific embodiment of the present disclosure, the polyolefin-containing porous membrane may electrically insulate a negative electrode from a positive electrode to prevent a short circuit and provide movement paths of lithium ions, and may include, without limitation, any polyolefin porous membrane that may be commonly used as separator substrates of electrochemical devices. The porous membrane substrate may include polyethylene, polypropylene, or a mixture or stack thereof.

In the present disclosure, the polyolefin-containing porous membrane may be 3 *µ*m to 50 *µ*m in thickness. The range of the polyolefin-containing porous membrane is not particularly limited to the above-described range, but when the thickness is too small below the above-described lower limit, the separator may be easily damaged during the use of the battery due to poor mechanical properties. The pore size and porosity of the polyolefin-containing porous membrane is not limited to a particular range, but may be 0.01 *µ*m to 50 *µ*m and 10 vol% to 95 vol%, respectively.

During the drying of the coated aqueous polymer slurry, the particulate acrylic binder polymer loses the particulate phase, then transforms into a film and migrates to the polyolefin-containing porous membrane. Accordingly, it may be possible to reduce the permeation of the wetting agent into the pores of the porous membrane. On the other hand, the particulate binder polymer retains the particulate phase after the drying, and is primarily located at the surface portion of the adhesive layer, and thereby improving the adhesion to the electrode.

The separator having the polymer adhesive layer manufactured by the aforementioned method includes:
a porous polymer substrate, and a polymer adhesive layer on at least one surface of the porous polymer substrate,
wherein the polymer adhesive layer includes a particulate binder polymer and a non-particulate binder polymer and a wetting agent,
wherein the particulate binder polymer has the Tg of 20°C or more and the average particle size of 300 to 800 nm, and
wherein the non-particulate binder polymer is acrylic binder polymer having the Tg of -10°C or less.

In an aspect of the present disclosure, the thickness of the polymer adhesive layer may be 0.5 to 3 *µ*m based on the thickness on one surface of the polyolefin porous membrane, but is not limited thereto.

The separator having the polymer adhesive layer may be applied to an electrochemical device. The electrochemical device may include a negative electrode, a positive electrode and the separator having the polymer adhesive layer between the negative electrode and the positive electrode. The electrochemical device includes any device where electrochemical reaction takes place, and specific examples of the electrochemical device include any type of primary battery, secondary battery, fuel cell, solar cell or capacitor. In particular, among the secondary batteries, lithium ion secondary batteries including lithium metal secondary batteries, lithium ion secondary batteries, lithium polymer secondary batteries or lithium ion polymer secondary batteries are desirable.

In a specific embodiment according to the present disclosure, the electrochemical device may be manufactured by methods commonly used in the art. According to an embodiment of the present disclosure, the electrochemical device may be manufactured by interposing the above-described separator having the polymer adhesive layer between the positive electrode and the negative electrode.

That is, the separator having the polymer adhesive layer manufactured by the above-described method is interposed between the negative electrode and the positive electrode and they are formed into an electrode assembly by a lamination process of applying heat and/or pressure to bond together. In an embodiment of the present disclosure, the lamination process may be performed by a roll press including a pair of press rollers. That is, the negative electrode, the separator and the positive electrode may be stacked in a sequential order and placed between the press rollers to form interlayer bonds. In this instance, the lamination process may be performed by hot pressing.

The electrode assembly including the negative electrode, the separator and the positive electrode stacked and assembled together may be placed in a battery case and an electrolyte solution may be injected to manufacture the electrochemical device.

In an embodiment of the present disclosure, the electrode is not limited to a particular type, and may be manufactured by adhering an electrode active material to an electrode current collector by methods commonly used in the art. In the electrode active material, non-limiting examples of the positive electrode active material may include any positive electrode active material commonly used in positive electrodes of electrochemical devices, and in particular, preferably includes lithium intercalation materials such as lithium manganese oxide, lithium cobalt oxide, lithium nickel oxide, lithium iron oxide or composite oxide thereof. Non-limiting examples of the negative electrode active material may include any negative electrode active material commonly used in negative electrodes of electrochemical devices, and in particular, preferably includes lithium intercalation materials such as lithium metal or lithium alloy, carbon, petroleum coke, activated carbon, graphite or other carbons. Non-limiting examples of the positive electrode current collector may include foils made of aluminum, nickel or a combination thereof, and non-limiting examples of the negative electrode current collector may include foils made of copper, gold, nickel or copper alloy or a combination thereof.

The electrolyte solution that may be used in the present disclosure may include, but is not limited to, electrolyte solutions in which a salt is dissolved or dissociated in an organic solvent, the salt having a structure represented by, for example, A⁺B⁻, wherein A⁺ is an alkali metal cation such as Li⁺, Na⁺, K⁺ or a combination thereof, and B⁻ is an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ or a combination thereof, the organic solvent including propylene carbonate (PC), ethylene carbonate (EC), diethylcarbonate (DEC), dimethylcarbonate (DMC), dipropylcarbonate (DPC), dimethylsulfoxide, acetonitrile, dimethoxyethane, diethoxyethane, tetrahydrofuran, N-methyl-2-pyrrolidone (NMP), ethylmethylcarbonate (EMC), γ-butyrolactone or a mixture thereof.

The injection of the electrolyte solution may be performed in any suitable step of the battery manufacturing process according to a manufacturing process and required properties of a final product. That is, the injection of the electrolyte solution may be applied before battery assembly or in the final step of battery assembly. A process of applying the electrode assembly of the present disclosure to the battery may include a winding process commonly used in the art and a process of stacking (lamination, stacking) and folding the separator and the electrode.

Hereinafter, examples will be described in detail to provide a detailed description of the present disclosure. However, the examples according to the present disclosure may be modified in many other forms, and the scope of the present disclosure should not be interpreted as being limited to the following examples. The examples of the present disclosure are provided to explain the present disclosure to those skilled in the art completely and thoroughly.

### Example 1

A particulate binder polymer [D50: 400 nm, a copolymer of VDF and HFP at a mole ratio of 95:5, Tg: 40°C], a particulate acrylic binder polymer [D50: 150 nm, a copolymer of ethyl acrylate and methyl methacrylate, Tg: -20°C] and a wetting agent (a fluorine-containing surfactant) were dispersed in water at the weight specified in the following TABLE 1 to prepare an aqueous polymer slurry.

Subsequently, a polyethylene porous membrane (air permeability 80 sec/100 ml, resistance 0.4Ω, thickness 10 µm) was prepared, and the slurry was applied to two surfaces of the porous membrane by a bar coating method using a doctor blade and dried by 60°C hot air using a heat gun to prepare a separator having a polymer adhesive layer having the thickness of 1 µm based on the thickness on one surface.

### Example 2

A separator was prepared by the same process as Example 1 except that an aqueous polymer slurry having the composition specified in the following TABLE 1 was used.

### Comparative Example 1

A separator was prepared by the same process as Example 1 except that the wetting agent was not added.

### Comparative Example 2

A separator was prepared by the same process as Example 1 except that the particulate acrylic binder polymer was not added.

### Comparative Example 3

A separator was prepared by the same process as Example 1 except that the particle size D50 of the particulate binder polymer was changed to 200 nm.

**[TABLE 1]**

| | | Example 1 | Example 2 | Comparative Example 1 | Comparative Example 2 | Comparative Example 3 |
|---|---|---|---|---|---|---|
| Amount (wt%) | Particulate binder polymer | 8.5 (Tg 40°C, D50 400 nm) | 8.5 (Tg 40°C, D50 600 nm) | 8.5 (Tg 40°C, D50 400 nm) | 8.5 (Tg 40°C, D50 400 nm) | 8.5 (Tg 40°C, D50 200 nm) |
| | Particulate acrylic binder polymer | 3 (Tg -20°C, D50 150 nm) | 3 (Tg -20°C, D50 150 nm) | 3 (Tg -20°C, D50 150 nm) | 0 | 3 (Tg -20°C, D50 150 nm) |
| | Wetting agent | 0.2 | 0.2 | 0 | 0.2 | 0.2 |
| Properties | Wettability | ○ | ○ | X | △ | △ |
| | Peel(gf/15mm ) | 32 | 40 | X | X | 5 |
| | Air permeability (sec/100ml) | 140 | 145 | 100 | 1200 | 500 |
| | Resistance (Ω) | 0.85 | 0.8 | 0.9 | 3.1 | 2.8 |

In the above TABLE 1, wettability and PEEL were evaluated as follows.
Wettability ∘: the slurry was evenly coated on the porous membrane surface without bubbles
Wettability △: an uncoated portion was present in the middle of the coating layer when coating the slurry on the porous membrane, resulting in uneven distribution
Wettability X: the slurry was not coated on the porous membrane surface, resulting in uneven distribution
PEEL X: the porous membrane and the polymer adhesive layer were not bonded together and were peeled with a small force

### Measurement of average particle size D50

D50 may be defined as a particle size at 50% of particle size distribution, and was measured using a laser diffraction method.

### Measurement of Tg

Using differential scanning calorimetry (DSC), Tg of 25 mg of sample was measured in a nitrogen atmosphere in a range between room temperature and 300°C under the condition of temperature increase rate of 10°C/min.

### PEEL measurement

The separator obtained in each Example and each Comparative Example was attached to a double-sided tape to prepare a sample. In this instance, rollers were used to uniformly attach. The sample was 1.5 cm x 6 cm in size.

Each of the samples was left untouched at room temperature for 1 hour and adhesive strength was measured. The adhesive strength was measured by peeling at the angle of 180° using a tensile testing machine (universal testing machine (UTM)).

## Claims

1. A method for manufacturing a separator having a polymer adhesive layer, comprising:
(S1) preparing an aqueous polymer slurry comprising a particulate binder polymer having a glass transition temperature (Tg) of 20°C or more and a particle size D50 of 300 to 800 nm, a wetting agent and a particulate acrylic binder polymer having a Tg of -10°C or less and a particle size D50 of 100 to 200 nm; and
(S2) coating the aqueous polymer slurry on at least one surface of a polyolefin-containing porous membrane having pores and drying the aqueous polymer slurry.

2. The method for manufacturing the separator having the polymer adhesive layer according to claim 1, wherein the particle size D50 of the particulate binder polymer: the particle size D50 of the particulate acrylic binder polymer is 2:1 to 6:1.

3. The method for manufacturing the separator having the polymer adhesive layer according to claim 1, wherein the particle size D50 of the particulate binder polymer is 300 to 600 nm, and the particle size D50 of the particulate acrylic binder polymer is 100 to 150 nm.

4. The method for manufacturing the separator having the polymer adhesive layer according to claim 1, wherein the Tg of the particulate acrylic binder polymer is -20°C or less.

5. The method for manufacturing the separator having the polymer adhesive layer according to claim 1, wherein a weight ratio of the particulate binder polymer and the particulate acrylic binder polymer is 95:5 to 97:3.

6. The method for manufacturing the separator having the polymer adhesive layer according to claim 1, wherein the wetting agent is included in an amount of 1 to 30 weight% based on a total weight of the particulate binder polymer and the particulate acrylic binder polymer.

7. The method for manufacturing the separator having the polymer adhesive layer according to claim 1, wherein the particulate binder polymer is an acrylic binder polymer, a polyvinylidene fluoride-containing binder polymer or a mixture thereof.

8. The method for manufacturing the separator having the polymer adhesive layer according to claim 7, wherein the polyvinylidene fluoride-containing binder polymer is a homopolymer of vinylidene fluoride, a copolymer of vinylidene fluoride and other polymerizable monomer or a mixture thereof.

9. The method for manufacturing the separator having the polymer adhesive layer according to claim 1, wherein the particulate acrylic binder polymer includes an acrylic polymer including alkyl methacrylate repeat units having an alkyl group having 1 to 18 carbon atoms.

10. The method for manufacturing the separator having the polymer adhesive layer according to claim 1, wherein the particulate binder polymer is a polyvinylidene fluoride-containing binder polymer, and the particulate acrylic binder polymer is an acrylic polymer including alkyl methacrylate repeat units having an alkyl group having 1 to 18 carbon atoms.

11. The method for manufacturing the separator having the polymer adhesive layer according to claim 1, wherein the wetting agent is at least one selected from the group consisting of a fluorine-containing surfactant, a siloxane-containing surfactant and a hydrocarbon-containing surfactant.

12. The method for manufacturing the separator having the polymer adhesive layer according to claim 1, wherein a dispersion medium of the aqueous polymer slurry is water.

13. A separator having a polymer adhesive layer, comprising:
a porous polymer substrate, and a polymer adhesive layer on at least one surface of the porous polymer substrate,
wherein the polymer adhesive layer comprises a particulate binder polymer, a non-particulate binder polymer and a wetting agent,
wherein the particulate binder polymer has a glass transition temperature (Tg) of 20°C or more and an average particle size of 300 to 800 nm, and
wherein the non-particulate binder polymer is an acrylic binder polymer having a Tg of -10°C or less.

14. An electrochemical device, comprising:
a negative electrode, a positive electrode and a separator interposed between the negative electrode and the positive electrode, wherein the separator is the separator having the polymer adhesive layer according to claim 13.

15. The electrochemical device according to claim 14, wherein the electrochemical device is a lithium secondary battery.
